# EUROPEAN PATENT SPECIFICATION

(11) **EP 1 908 046 B1**
(45) Date of publication and mention of the grant of the patent: **17.06.2009**
(21) Application number: 06786605.3
(22) Date of filing: 10.07.2006
(51) Int. Cl.: G09F 3/20, G09F 1/10, A45C 11/18, A45C 13/42, B42F 7/02, B42F 7/06, B32B 27/00

(54) **CARD WITH POCKET**
KARTE MIT TASCHE
CARTE AVEC POCHE

(30) Priority: 28.07.2005 US 191529
(43) Date of publication of application: 09.04.2008
(73) Proprietor: Versatile Card Technology, Inc., Downers Grove, IL 60515 (US)
(72) Inventor: MILLER, Craig, A., Belvidere, IL 61008 (US); CELEWICZ, Dariusz, J., Glenview, IL 60025 (US); VENKITASAMY, Pushparaj, West Chicago, IL 60185 (US); CRAMER, Brian, D., St. Charles, IL 60174 (US)
(74) Representative: Moore, Barry
(86) International application number: PCT/US2006/026511
(87) International publication number: WO 2007/018874

(56) References cited:
- DE-U1- 9 000 892
- DE-U1- 20 006 804
- US-A- 2 898 257
- US-A- 5 025 581
- US-A- 5 784 816
- US-A- 6 023 790

## Description

### TECHNICAL FIELD

The present invention relates generally to a card having a pocket, and more specifically to a substantially planar laminated plastic card, such as a financial card, gift card, luggage tag, etc., having an integral pocket and a method for manufacturing the same.

### BACKGROUND OF THE INVENTION

Financial and gift cards are well known in the art. Standard financial and gift cards generally comprise a plurality of substrates and films laminated together. While such financial and gift cards according to the prior art provide a number of advantageous features, they nevertheless have certain limitations. The present invention seeks to overcome certain of these limitations and other drawbacks of the prior art, and to provide new features not heretofore available. A full discussion of the features and advantages of the present invention is deferred to the following detailed description, which proceeds with reference to the accompanying drawings.
US Patent no. 2,898,257 discloses a combined card mount and pocket and a method of making the same.

### SUMMARY OF THE INVENTION

Accordingly, a first embodiment of the invention provides a pocket card as detailed in claim 1. Advantageous embodiments are provided in the dependent claims.

Other features and advantages of the invention will be apparent from the following specification taken in conjunction with the following drawings.

### BRIEF DESCRIPTION OF THE DRAWINGS

To understand the present invention, it will now be described by way of example, with reference to the accompanying drawings in which:

FIG. 1 is a perspective view of one embodiment of a card having a pocket;

FIG. 2 is an exploded perspective view of the card of FIG. 1;

FIG. 3 is side cross-sectional view of the card through line 3-3 of FIG. 1;

FIG. 4 is an end elevation view of the card of FIG. 1;

FIG. 5 is a top plan view of a layer of the card of FIG. 1, showing one embodiment of a laminating-free mask;

FIG. 6 is an exploded perspective view of another embodiment of card having a plurality of pockets;

FIG. 7 is an exploded perspective view of another embodiment of a card having a pocket with a pull-out pocket-forming member;

FIG. 8 is a rear plan view of another embodiment of a card having a stand;

FIG. 9 is a side elevation view of the embodiment of FIG. 8; and,

FIG. 10 is a schematic flow diagram of one embodiment of a process for manufacturing a card having a pocket.

### DETAILED DESCRIPTION

While this invention is susceptible of embodiments in many different forms, there is shown in the drawings and will herein be described in detail preferred embodiments of the invention with the understanding that the present disclosure is to be considered as an exemplification of the principles of the invention and is not intended to limit the broad aspect of the invention to the embodiments illustrated.

Referring now to the Figures, there are shown various embodiments of a card 10 having at least one cavity or pocket 12. In general, the card 10 comprises a plurality of layers of material joined at their periphery to create the cavity or pocket 12, and an opening 14 provided at one side of the card 10 providing access to the cavity 12. As such, removable inserts, such as pictures, can be placed into the cavity 12 through the opening 14 in the card 10. In one embodiment the card 10 takes the form of a financial card, bank card, gift card, etc., and has a size which meets CR80 specifications. After the card 10 is formed and cut it is substantially planar (i.e., generally flat) and rigid (i.e., it is able to maintain its form and shape, but can still be flexed and bent to a degree without breaking and will return to its original shape). These meanings of planar and rigid are utilized throughout.

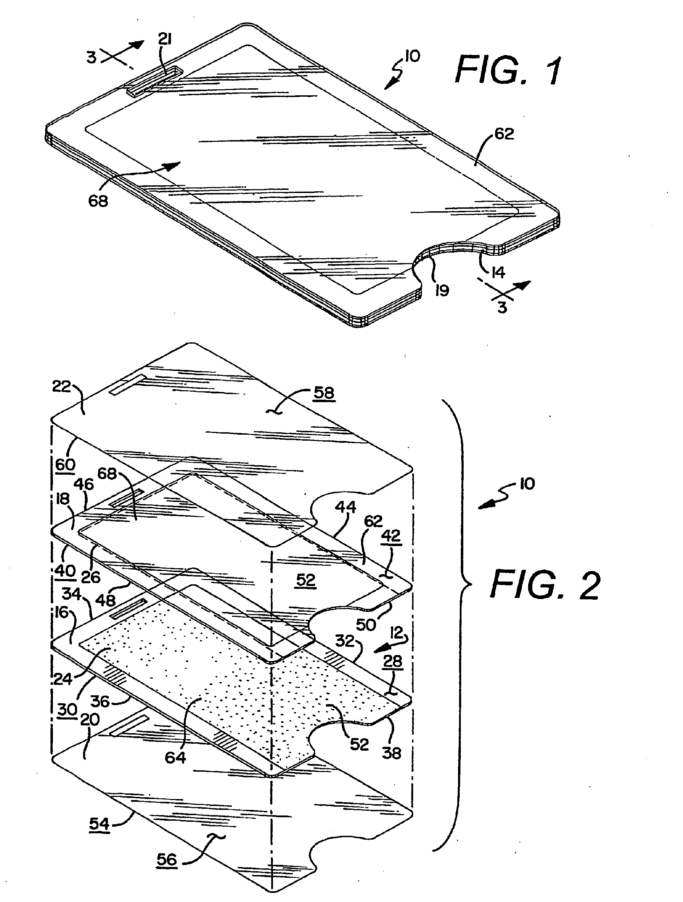

In one embodiment, referring specifically to FIGS. 1-4, the card 10 contains a first cavity 12. In this embodiment the card 10 comprises a first substrate 16, a second substrate 18, a first covering 20 and a second covering 22, however, an alternate embodiment may be created without utilizing the first and second coverings 20, 22. This embodiment also utilizes a first mask 24 and a second mask 26 to assist in defining the pocket 12 and opening 14 thereto.

The first substrate 16 is generally made of a generally rigid plastic material (the term plastic and plastic material herein universally refers to any polymeric material), and is substantially planar in its finished form. Additionally, in a preferred embodiment the first substrate 16 is generally opaque. This may be accomplished through material properties, or through a coating, such as a printing on its surface to appear non-transparent. Alternatively, the first substrate 16 could be transparent. In a preferred embodiment, the first substrate 16 is made of an 8 mil. solid core white PVC material, however, it is understood that thinner or thicker substrates, as well as different materials, may be utilized. The material may be provided in sheet or roll form.

The first substrate 16 has a first surface 28 and a second surface 30 opposing the first surface 28. The first substrate 16 also has a plurality of sides. In one embodiment wherein the card 10 is generally rectangular or square, the first substrate 16 has a first side 32, a second side 34 opposing the first side 32, a third side 36 and a fourth side 38 opposing the third side 36. The sides 32, 34, 36 and 38 of the first substrate 16 define a perimeter.

Like the first substrate 16, the second substrate 18 is also generally made of a generally rigid plastic material, and is substantially planar in its finished form. In one embodiment, however, instead of being generally opaque like the first substrate 16, the second substrate 18 is generally clear or transparent. Alternatively, the second substrate 18 could also be opaque. Additionally, in a preferred embodiment the second substrate 18 is made of an 8 mm. solid core PVC material, however, it is understood that thinner or thicker substrates, as well as different materials, may be utilized. The material may be provided in sheet or roll form.

The second substrate 18 has a first surface 40 and a second surface 42 opposing the first surface 40. The second substrate 18 also has a plurality of sides. In one embodiment wherein the card 10 is generally rectangular or square, the second substrate 18 has a first side 44, a second side 46 opposing the first side 44, a third side 48 and a fourth side 50 opposing the third side 48. The sides 44, 45, 48 and 50 of the second substrate 18 define a perimeter thereof.

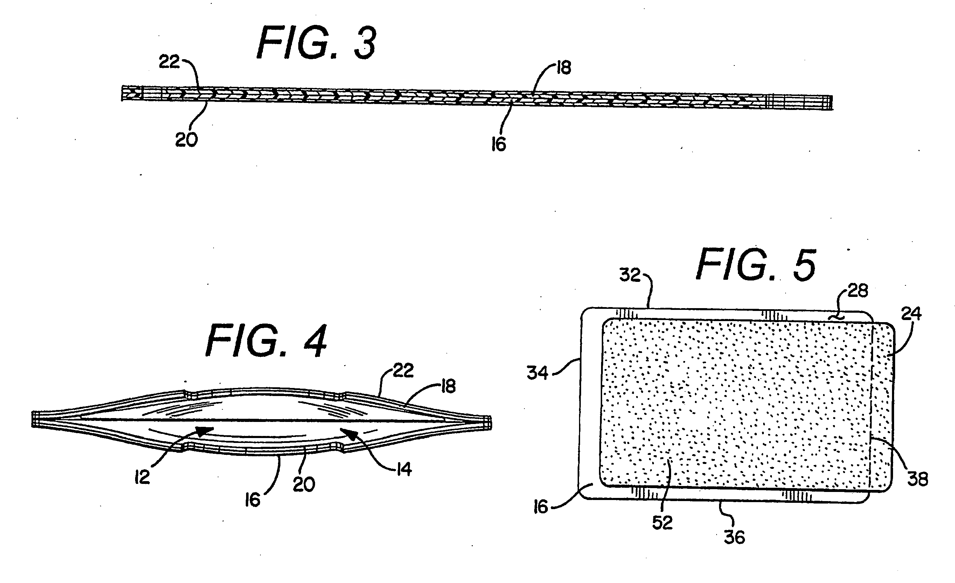

As shown in FIGS. 1-4, a portion of the first surface 28 of the first substrate 16 is secured or connected to a portion of the first surface 40 of the second substrate 18, and in one embodiment they are laminated together. Preferably, the first and second substrates 16, 18 are secured to one another at a portion adjacent the perimeters thereof to define the cavity 12 therebetween. More specifically, a portion of the first surface 28 adjacent the first side 32 of the first substrate 16 is connected to a portion of the first surface 40 adjacent the first side 44 of the second substrate 18, a portion of the first surface 28 adjacent the second side 34 of the first substrate 16 is connected to a portion of the first surface 40 adjacent the second side 46 of the second substrate 18, and a portion of the first surface 28 adjacent the third side 36 of the first substrate 16 is connected to a portion of the first surface 40 adjacent the third side 48 of the second substrate 18. The area between the connected portions is the cavity 12. An end view of the open cavity is shown in FIG. 4. Additionally, in various embodiments a portion of the first surface 28 adjacent the fourth side 38 of the first substrate 16 may be connected to a portion of the first surface 40 adjacent the fourth side 50 of the second substrate 18, thereby making the opening 14 smaller. If a portion of the first and second substrates 16, 18 adjacent the fourth sides 38, 50 thereof are connected, the portions generally are those also adjacent the first and third sides 32 and 44, and 36 and 48, respectively, thereof.

A notch 19 may be provided in the card 10 adjacent the opening 14 to assist in inserting and removing items from the cavity 12. The notch 19 is typically provided in each layer of the card 10 during die cutting thereof, however, it is understood that the notch 19 may be provided in less than all the layers without departing from the scope of the present invention. An additional aperture 21 may also be provided in the card 10 to allow a strap or other component to be inserted therethrough, such as for a luggage identifier.

In one embodiment, the portion of the perimeter (i.e., adjacent the sides of the substrates 16,18) of the first and second substrates 16, 18 that are connected extends from approximately the edge of the sides and extends a distance inward. For example, the portion of the perimeter may extend approximately 0.3175 cm (0.125") or 0.635 cm (0.250") inward from the edge of the side, however, the range of the portion of the surfaces that are connected may be from less than 0.254 cm (0.100") wide to at least 0.9525 cm (0.375") wide, and any distance therebetween, however it is understood that the distance of the portion of the surfaces that are connected may be narrower or wider without departing from the scope of the present invention.

Referring to FIGS. 2 and 5, in one embodiment the portion of the first and second substrates 16, 18 that are connected together is that portion that is exterior of the mask. The mask is generally a component that shields a surface from the effects of any bonding or lamination process, should that surface be subject to any such processes. In one embodiment where the first and second substrates 16, 18 are laminated together, the masks 24, 26 effectively provide a lamination-free zone and the non-masked portions will therefore define the laminated or bonded area operating as the frame or perimeter of the pocket 12, as well as the opening 14 to the pocket 12.

As shown, in this embodiment the first substrate 16 has a first mask 24 on a portion of the first surface 28 thereof, and the second substrate 18 has a second mask 26 on a portion of the first surface 40 thereof. Alternatively, a single mask may be provided on the first surface of one of the first or second substrates 16, 18. In one embodiment the masks 24, 26 do not extend to the edge of the first, second or third sides, (32, 24, 36 of the first substrate 16 and 44, 46 and 48 of the second substrate 18), thereby shielding only the interior portion 52 to define the cavity 12 of the card 10. Additionally, as shown in FIGS. 2 and 5, the mask 24,26 extends fully to the edge of the fourth sides 38, 50 of the first and second substrates 16, 18 to define the opening 14 to the pocket 12. In this embodiment, the opening 14 to the cavity or pocket 12 extends from fourth sides 38, 50 of the first and second substrates 16, 18 to provide appropriate access to the cavity 12.

The mask can be applied in a variety of processes, including various printing processes. Two such processes which may be utilized are litho printing, including using an offset litho process and/or a silkscreen process. Additionally, a flexographic process may be utilized. In a preferred embodiment, a gloss antistatic top-coat 16442 mask coating from Northwest Coating is applied utilizing a lithographic process.

As explained above, in various embodiments the card 10 also has first and second coverings or overlays 20, 22. The first covering 20 is generally connected to the first substrate 16, and the second covering 22 is generally connected to the second substrate 18. Typically, the coverings have the same shape and size as the substrate they are connected to, respectively. Accordingly, the sides of the coverings are adjacent the sides of the appropriate substrate.

The first covering 20 has a first surface 54 and a second surface 56. In one embodiment the second surface 56 of the first covering 20 is secured via a lamination process to the second surface 30 of the first substrate 16, and the first surface 54 of the first covering 20 generally provides an outer layer or barrier for the card 10. Unlike the connection between the first and second substrates 16, 18 at the perimeters thereof, substantially the entire portion of the second surface 56 of the first covering 20 is generally secured to the second surface 30 of the first substrate 16, however, alternate embodiments may provide for alternate connections. Additionally, adhesives may be utilized for any connection of any layer described herein.

Similarly, the second covering 22 has a first surface 58 and a second surface 60. In one embodiment the second surface 60 of the second covering 22 is secured via a lamination process to the second surface 42 of the second substrate 18, and the first surface 58 of the second covering 22 generally provides an opposing outer layer or barrier for the card 10. Unlike the connection between the first and second substrates 16, 18 at the perimeters thereof, substantially the entire portion of the second surface 60 of the second covering 22 is generally secured to the second surface 42 of the second substrate 18, however, alternate embodiments may provide for alternate connections.

The first and second coverings 20, 22, also referred to as overlays or over-laminating film in certain processes, are generally made of a plastic material, typically a clear or transparent plastic material, and preferably is made of clear PVC. In a preferred embodiment, the coverings 20, 22 are approximately 2 mm. thick, however, it is understood that thinner or thicker overlays, as well as different materials, may be utilized without departing from the scope of the present invention. For example, the thickness of the film for the coverings 20,22 may be within the range of from 1 mm. to about 6 mm. The overlay material preferably has properties of being heat-sealable, durable, low permeability to oxygen, carbon dioxide and gases in general, and is a material that has strength and flexibility at both room temperature and low temperatures. The overlay material may be provided in sheet or roll form. Alternatively, the overlay may be provided in a printing or silk screen process, or any equivalent process.

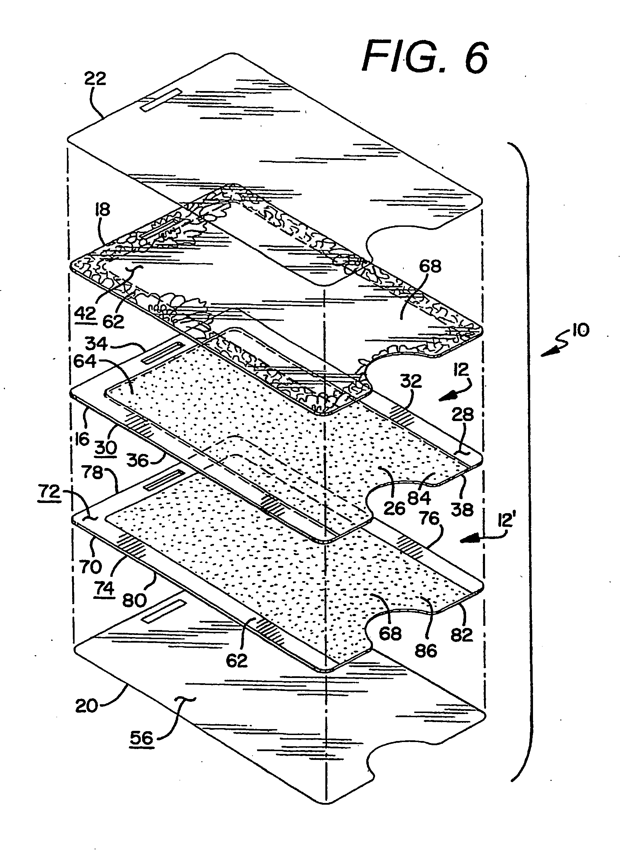

Additionally, prior to the connection of the different layers of components, various layers and surfaces thereof may be printed (see the embodiment of FIG. 6). Typically, printing is provided on a portion of a perimeter of one of the first substrate 16 and the second substrate 18 to thereby define the frame 62. In a preferred embodiment, the printing is applied to at least one of the first and second surfaces 40, 42 of the second substrate 18 (i.e., an exterior member making up the cavity). The printing may be utilized to provide a frame 62 for the card 10, to provide a background 64 for the card 10, as well as to provide indicia (not shown) for the card 10. For example, in the embodiments illustrated in FIGS. 1-4 and/or 6, various printing is provided on the first and second substrates 16, 18. In this embodiment, the frame 62 is printed on the second surface 42 of the second substrate 18. By providing a frame 62 on the second substrate 18, a window 68 is defined between the interior edges of the frame 62. Additionally, the background 64 is printed on the first surface 28 of the first substrate 16. Indicia (not shown), such as legal disclaimers or other text may also be applied to the second surface 42 of the second substrate 18. The printing is generally applied to the substrates prior to any mask being applied thereto, and the masks therefore generally reside on top of any printing thereon.

Another embodiment of the pocket card 10 is provided in FIG. 6. This embodiment, however, includes the first cavity or pocket 12, and a second cavity or pocket 12'. To provide the second cavity 12' in this embodiment, a third substrate 70 is provided. The third substrate 70 has a first surface 72, a second surface 74 opposing the first surface 72, a first side 76, a second side 78 opposing the first side 76, a third side 80, and a fourth side 82 opposing the third side 80. The sides of the third substrate 70 define a perimeter thereof. The first cavity 12 is provided between the first and second substrates 16, 18, as explained above with the prior embodiment, and the second cavity 12' is provided between the first and third substrates 16, 70. Accordingly, the first substrate 16 operates as a divider between the first cavity 12 and the second cavity 12'.

Like the first substrate 16 and the second substrate 18, the third substrate 70 is also generally made of a generally rigid plastic material and is substantially planar in its finished form. The third substrate 70 may be clear and transparent, or it may be opaque and have some color thereto. In a preferred embodiment, the third substrate 70 is substantially clear, similar to the second substrate 18. Additionally, in a preferred embodiment the third substrate 70 is made of an 8 mil. solid core PVC material, however, it is understood that thinner or thicker substrates, as well as different materials, may be utilized. The material may be provided in sheet or roll form.

As shown in FIG. 6, a portion of the second surface 30 of the first substrate 16 is secured or connected to a portion of the first surface 72 of the third substrate 70, and in one embodiment they are laminated together. In one embodiment, the first and third substrates 16, 70 are secured to one another at a portion adjacent the perimeters thereof to define the second cavity 12' therebetween. More specifically, a portion of the second surface 30 adjacent the first side 32 of the first substrate 16 is connected to a portion of the first surface 72 adjacent the first side 76 of the third substrate 70, a portion of the second surface 30 adjacent the second side 34 of the first substrate 16 is connected to a portion of the first surface 72 adjacent the second side 78 of the third substrate 70, and a portion of the second surface 30 adjacent the third side 36 of the first substrate 16 is connected to a portion of the first surface 72 adjacent the third side 80 of the third substrate 70. The area between the connected portions is the second cavity 12'. Additionally, in various embodiments a portion of the second surface 30 adjacent the fourth side 38 of the first substrate 16 may be connected to a portion of the first surface 72 adjacent the fourth side 82 of the third substrate 70. If a portion of the first and third substrates 16, 70 adjacent the fourth sides 38, 82 thereof are connected, the portions generally are those also adjacent the first and third sides 32 and 76, and 36 and 80, respectively, thereof.

In one embodiment, like the attachment configuration in one embodiment described in connection with FIGS. 1-4, the portion of the perimeter (i.e., adjacent the sides of the first substrate 16 and the third substrate 70) of the first and third substrates 16, 70 that are connected extends from approximately the edge of the sides and extends a distance inward. For example, the portion of the perimeter may extend approximately 0.3175 cm (0.125") or 0.635 cm (0.250") inward from the edge of the side, however, the range of the portion of the surfaces that are connected may be from less than 0.254 cm (0.100") wide to at least 0.9525 cm (0.375") wide, and any distance therebetween, however it is understood that the distance of the portion of the surfaces that are connected may be narrower or wider without departing from the scope of the present invention.

Similar to various descriptions relating to other embodiments, in a preferred embodiment the portion of the first and third substrates 16, 70 that are connected together is that portion that is exterior of a mask. As previously explained, the mask is generally a component that shields a surface from the effects of any bonding or lamination process, should that surface be subject to any such processes. In the embodiment of FIG. 6, where the first and third substrates 16, 70 are laminated together to form the second cavity 12', masks are provided on the second surface 30 of the first substrate 16 and on the first surface 72 of the third substrate 70 to effectively provide a lamination-free zone for defining the second cavity 12', thereby allowing the non-masked portions to define the laminated or bonded area operating as the frame or perimeter of the second pocket 12', as well as the opening 14 to the second pocket 12'.

As shown, in this embodiment the first substrate 16 has a third mask 84 on a portion of the second surface 30 thereof, and the third substrate 70 has a fourth mask 86 on a portion of the first surface 72 thereof. Alternatively, a single mask may be provided on either the second surface 30 of the first substrate 16 or the first surface 72 of the third substrate 70. In one embodiment the masks 84, 86 do not extend to the edge of the first, second or third sides of either the first substrate 16 or the third substrate 70, thereby shielding only the interior portion 52' to define the second cavity 12' of the card 10. Like that shown in FIG. 5, the masks of this embodiment for creating the second cavity 12' preferably extend fally to the edge of the fourth sides 38, 82 of the first and third substrates 16, 70 to define the opening 14 to the second pocket 12'.

Additionally, in this embodiment the first covering or overlay 20 would be connected to the third substrate 70, instead of being connected to the first substrate 16. More specifically, in one embodiment the second surface 56 of the first covering 20 is secured via a lamination process to the second surface 74 of the third substrate 70 to allow the first surface 54 of the first covering 20 to provide an outer layer or barrier for the card 10. Unlike the connection between the first and second substrates 16, 18 or between the first and third substrates 16, 70 at the perimeters thereof, substantially the entire portion of the second surface 56 of the first covering 20 is generally secured to the second surface 74 of the third substrate 70, however, alternate embodiments may provide for alternate connections.

It is understood that any printing on the card of FIG. 6 having two cavities 12 and 12' would be similar to that described above with other embodiments. Preferably, as described above, the third substrate 70 would have a printed frame 62 to define a window 68.

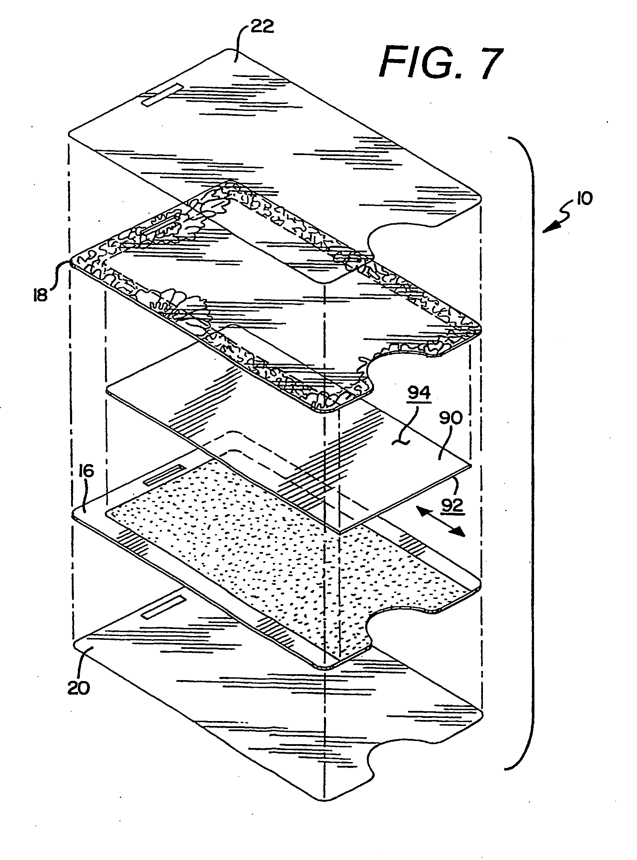

In a further alternate embodiment, shown in FIG. 7, a removable core 90 is provided between the first and second substrates 16, 18. Typically, the removable core 90 has similar material and thickness properties of the other substrates 16, 18, 70. The removably core 90 has opposing first and second surfaces 92, 94 and a plurality of sides. The size and shape of the removable core 90 is generally substantially similar to the size and shape of the cavity 12 of the card 10. The removable core preferably has a non-laminating mask provided on both its first and second surfaces 92, 94 to prevent lamination between its surface and adjacent surfaces. Accordingly, when the various layers are connected, such as by a lamination process, portions of the first and second substrates 16, 18 will be secured together adjacent the first, second and third sides thereof, but the removable core 90 remains in the cavity 12 and can be removed therefrom. By providing the removable core 90 a cavity thickness is provided in the cavity 12 to allow thicker inserts to be placed in the cavity 12.

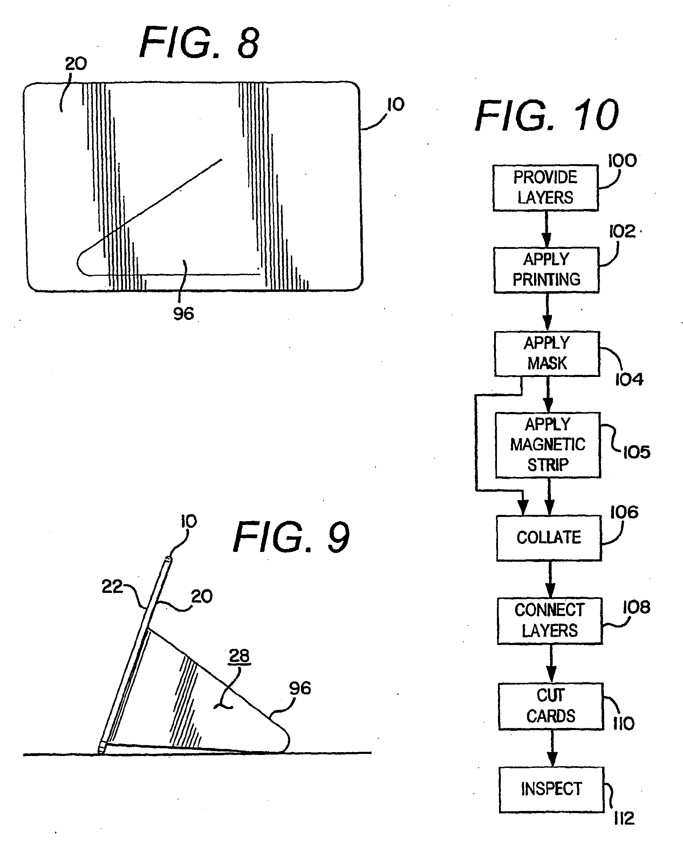

Yet another alternate embodiment is shown in FIGS. 8 and 9. In this embodiment a stand 96 comprising a flap of the card 10 extends from the card 10. The stand 96 is formed from various layers of the card 10, and can be rotated or hinged outwardly from a first position to a second position. In the first position, shown in FIG. 8, the stand 96 is substantially planar with the card 10. In the second position, shown in FIG. 9, the stand 96 extends transversely from the card 10 and can assist in supporting the card 10 in a raised position, such as a picture frame, to allow the contents of the pocket 12 to be viewed.

Referring to the embodiment of FIGS. 1-4 wherein the card 10 comprises four layers, a first substrate 16, a second substrate 18, a first overlay 20 and a second overlay 22, the stand 96 is generally comprised of a portion of the first substrate 16 and the first overlay 20 connected thereto. And, in the embodiments wherein a third substrate 70 is provided, the stand 96 is generally comprised of a portion of the third substrate 70 and the first overlay 20 connected thereto. The stand 96 is typically made of a die-cut portion of the overall card 10. For example, the stand 96 is typically die cut after the various layers of the card 10 are connected to form the card 10 with a cutter that extends the appropriate depth to cut only the required layers of the card 10. For example, in the four layer embodiment, the cutter will generally only cut the outer first overlay 20 and the first substrate 16, thereby forming the stand 96 of those layers. The pocket 12 will thereby be accessible through the aperture 98 formed when the stand 96 is moved to the second position. In the five layer embodiment, the cutter will generally only cut the outer first overlay 20 and the third substrate 70, thereby forming the stand of those layers. The second pocket 12' will thereby be accessible through the aperture formed when the stand 96 is moved to the second position, but the first pocket 12 will not be accessible except through the opening 14.

The flow diagram of FIG. 10 schematically illustrates process steps in making a pocket card 10. First, as provided in step 100 the appropriate layers are provided, typically in sheet format. In one embodiment four layers comprise the card: the first layer is the first overlay 20, the second layer is the first substrate 16, the third layer is the second substrate 18, and the fourth layer is the second overlay 22. As shown above, different embodiments require different types and quantities of layers. A typical sheet that comprises each layer will contain available space for manufacturing 80 cards 10. Accordingly, each sheet will contain approximately 80 cards that will be created together and then cut apart from the sheet to create the individual cards 10.

After the desired layers are provided, the next step is generally a printing step. Thus, in step 102 the appropriate layers are printed as desired. For example, the second substrate 18 may be printed with a frame 62 on its first surface 40, and the first substrate 16 may be printed with a background on its first surface 28 and with any indicia on its second surface 30. After the printing is completed, in step 104 the mask is applied to the appropriate layers. At step 105, a machine readable member (not shown) such as a magnetic strip, may be applied to the appropriate layer of the card 10. The layers are then collated in step 106 to be placed in the appropriate order. After the layers are collated the sheets are connected in step 108. In a preferred embodiment the connection step is accomplished through a lamination process in a platen press under controlled conditions. For example, in one lamination process the layers are laminated at 444.26 K (340°F) at 9.99 bar (145 PSI) for approximately 16 minutes. The layers are then cooled for an additional 16 minutes at 13.23 bar (192 PSI). It is understood that different materials and layer combinations will require different lamination process parameters. After the layers are connected, at step 110 the connected sheets are cut into individual cards, preferably in a die cutter, to the desired card size, typically that which meets CR80 specifications. In step 110, the notch and the stand 96 may also be formed. With respect to the stand 96, in one exemplar process step, one component of the die cutter may cut through the entire thickness of the card to create the individual card, but another component of the die cutter may create the stand 96 by only cutting through the appropriate layers of the card. In step 112 the individual cards 10 are inspected for defects and non-conformance, and moved to the hot-stamp department. Any signature panels, holograms or other decorations, if desired, may be applied to the card 10 at that point. The finished cards are then counted and packed according to customer specifications.

Several alternative embodiments and examples have been described and illustrated herein. A person of ordinary skill in the art would appreciate the features of the individual embodiments, and the possible combinations and variations of the components. A person of ordinary skill in the art would further appreciate that any of the embodiments could be provided in any combination with the other embodiments disclosed herein. Additionally, the terms "first," "second," "third," and "fourth" as used herein are intended for illustrative purposes only and do not limit the embodiments in any way. Further, the term "plurality" as used herein indicates any number greater than one, either disjunctively or conjunctively, as necessary, up to an infinite number.

## Claims

1. A pocket card (10) comprising:
a first plastic substrate (16) having a first surface (28) and a second surface (30), a second plastic substrate (18) having a first surface (40) and a second surface (42),
**characterised in that:**
a portion of the first surface of the first plastic substrate (16) having a first laminating-free mask thereon, and a portion of the first surface of the first plastic substrate (16) being free of the laminating-free mask, the first and second substrates (16, 18) being subjected to heat and pressure to laminate the portion of the first plastic substrate (16) that is free of the laminating-free mask to a portion of the first surface of the second plastic substrate (18) to define a cavity (12) therebetween, and an opening (14) to the cavity (12) extending from a side of the first and second substrates (16, 18) to provide access to the cavity (12); and,
a first covering (20) secured to the second surface of the first substrate (16) and a second covering (22) secured to the second surface of the second substrate (18).

2. The pocket card of claim 1, further comprising a second laminating-free mask on a portion of the first surface of the second substrate (18), opposing the first mask (24), the second mask (26) extending into the opening of the card.

3. The pocket card of claim 1, further comprising printing on a portion of a perimeter of one of the first substrate (16) and the second substrate (18) to thereby define a frame (62).

4. The pocket card of claim 3, wherein the frame is provided on the second substrate (18), and wherein the frame defines a window providing viewing into the cavity (12) through the window.

5. The pocket card of claim 1, wherein the first plastic substrate (16) is opaque.

6. The pocket card of claim 1, wherein the second plastic substrate (18) is clear.

7. The pocket card of claim 1, wherein the first and second coverings comprise a transparent PVC film.

8. The pocket card of claim 1, further comprising a flap extending from the card, the flap being capable of operating as a stand for the card (10).

9. The pocket card of claim 1, further comprising a machine readable member on one of the first and second plastic substrates (16, 18).

10. The pocket card of claim 9, wherein the machine readable member is a magnetic strip.

11. The pocket card of claim 1, wherein the card meets CR80 size specifications.

12. The pocket card of claim 1, wherein the second substrate (18) has a clear portion and a opaque portion, the opaque portion being adjacent a perimeter of the second substrate (18) and defining a frame, and the clear portion being interior of the frame and defining a window, wherein a portion of a perimeter of the first substrate (16) is laminated to a portion of the perimeter of the second substrate (18) utilizing heat and pressure, and wherein the window provides visual access to the cavity (12) of the card (10).

## Patentansprüche

1. Taschenkarte (10), welche enthält:
ein erstes Kunststoffsubstrat (16), welches eine erste Oberfläche (28) und eine zweite Oberfläche (30) hat, ein zweites Kunststoffsubstrat (18), welches eine erste Oberfläche (40) und eine zweite Oberfläche (42) hat, **dadurch gekennzeichnet, dass**:
ein Abschnitt von der ersten Oberfläche von dem ersten Kunststoffsubstrat (16) eine erste laminierfreie Maske darauf hat, und ein Abschnitt von der ersten Oberfläche von dem ersten Kunststoffsubstrat (16) keine laminierfreie Maske hat, wobei das erste und zweite Substrat (16, 18) einer Wärme und einem Druck unterworfen werden, um den Abschnitt von dem ersten Kunststoffsubstrat (16), welcher keine laminierfreie Maske hat, mit einem Abschnitt von der ersten Oberfläche von dem zweiten Kunststoffsubstrat (18) zu laminieren, um einen Hohlraum (12) dazwischen und eine Öffnung (14) zu dem Hohlraum (12) zu bestimmen, welche sich von einer Seite von dem ersten und zweiten Substrat (16, 18) erstreckt, um einen Zugriff zu dem Hohlraum (12) bereitzustellen; und
eine erste Abdeckung (20) an der zweiten Oberfläche von dem ersten Substrat (16) gesichert ist und eine zweite Abdeckung (22) an der zweiten Oberfläche von dem zweiten Substrat (18) gesichert ist.

2. Taschenkarte nach Anspruch 1, welche ferner eine zweite laminierfreie Maske auf einem Abschnitt von der ersten Oberfläche von dem zweiten Substrat (18) enthält, welche der ersten Maske (24) gegenüberliegt, wobei sich die zweite Maske (26) in die Öffnung von der Karte erstreckt.

3. Taschenkarte nach Anspruch 1, welche ferner eine Bedruckung auf einem Abschnitt von einer Umfassung von einem von dem ersten Substrat (16) und dem zweiten Substrat (18) enthält, um **dadurch** einen Rahmen (62) zu bestimmen.

4. Taschenkarte nach Anspruch 3, bei welcher der Rahmen auf dem zweiten Substrat (18) bereitgestellt ist, und bei welcher der Rahmen ein Fenster bestimmt, welches eine Sicht in den Hohlraum (12) durch das Fenster bereitstellt.

5. Taschenkarte nach Anspruch 1, bei welcher das erste Kunststoffsubstrat (16) undurchsichtig ist.

6. Taschenkarte nach Anspruch 1, bei welcher das zweite Kunststoffsubstrat (18) durchsichtig ist.

7. Taschenkarte nach Anspruch 1, bei welcher die erste und zweite Bedeckung einen transparenten PVC-Film enthält.

8. Taschenkarte nach Anspruch 1, welche ferner eine Klappe enthält, welche sich von der Karte erstreckt, wobei die Klappe dazu in der Lage ist, als ein Ständer für die Karte (10) zu wirken.

9. Taschenkarte nach Anspruch 1, welche ferner ein maschinenlesbares Element auf einem von dem ersten und zweiten Kunststoffsubstrat (16, 18) enthält.

10. Taschenkarte nach Anspruch 9, bei welcher das maschinenlesbare Element ein Magnetstreifen ist.

11. Taschenkarte nach Anspruch 1, bei welcher die Karte den CR80-Größen-Spezifikationen genügt.

12. Taschenkarte nach Anspruch 1, bei welcher das zweite Substrat (18) einen durchsichtigen Abschnitt und einen undurchsichtigen Abschnitt hat, wobei der undurchsichtige Abschnitt einer Umfassung des zweiten Substrats (18) angrenzt und einen Rahmen bestimmt, und der durchsichtige Abschnitt innerhalb des Rahmens ist und ein Fenster bestimmt, wobei ein Abschnitt von einer Umfassung des ersten Substrats (16) an einem Abschnitt von der Umfassung des zweiten Substrats (18) unter Verwendung von Wärme und Druck laminiert ist, und wobei das Fenster einen Sichtzugriff auf den Hohlraum (12) von der Karte (10) bereitstellt.

## Revendications

1. Carte à poche (10) comprenant :
- un premier substrat en plastique (16) ayant une première surface (28) et une seconde surface (30) ;
- un second substrat en plastique (18) ayant une première surface (40) et une seconde surface (42),
**caractérisé en ce que :**
- une partie de la première surface du premier substrat en plastique (16) a sur celle-ci un premier masque libre de contre-collage, et une partie de la première surface du premier substrat en plastique (16) est libre du premier masque libre de contre-collage, le premier et le second substrats en plastique (16, 18) étant soumis à un chauffage et à de la pression pour contre-coller la partie du premier substrat en plastique (16) qui est libre du masque libre de contre-collage à une partie de la première surface du second substrat en plastique (18) pour définir une cavité (12) entre celles-ci, et une ouverture (14) vers la cavité (12) s'entendant depuis un côté des premier et second substrats (16, 18) pour fournir un accès à la cavité (12) ; et
- un premier revêtement (20) fixé à la seconde surface du premier substrat (16) et un second revêtement (22) fixé à la seconde surface du second substrat (18).

2. Carte à poche selon la revendication 1, comprenant en outre un second masque libre de contre-collage sur une partie de la première surface du second substrat (18), opposé au premier masque (24), le second masque (26) s'entendant à l'intérieur de l'ouverture de la carte.

3. Carte à poche selon la revendication 1, comprenant en outre une impression sur une partie d'un périmètre de l'un du premier substrat (16) et du second substrat (18) pour ainsi définir un cadre (62).

4. Carte à poche selon la revendication 3, dans laquelle le cadre est prévu sur le second substrat (18), et dans laquelle le cadre définit une fenêtre fournissant une vue dans la cavité (12) au travers de la fenêtre.

5. Carte à poche selon la revendication 1, dans laquelle le premier substrat en plastique (16) est opaque.

6. Carte à poche selon la revendication 1, dans laquelle le second substrat en plastique (18) est transparent.

7. Carte à poche selon la revendication 1, dans laquelle les premier et second revêtements comprennent un film PVC transparent.

8. Carte à poche selon la revendication 1, comprenant en outre un rabat s'étendant depuis la carte, le rabat étant apte à fonctionner comme un pied pour la carte (10).

9. Carte à poche selon la revendication 1, comprenant en outre un élément lisible par machine sur l'un des premier et second substrats (16, 18).

10. Carte à poche selon la revendication 9, dans laquelle l'élément lisible par machine est une bande magnétique.

11. Carte à poche selon la revendication 1, dans laquelle la carte satisfait aux caractéristiques de taille CR80.

12. Carte à poche selon la revendication 1, dans laquelle le second substrat (18) a une partie transparente et une partie opaque, la partie opaque étant adjacente d'un périmètre du second substrat et définissant un cadre, et la portion transparente étant interne au cadre et définissant une fenêtre, dans laquelle une portion d'un périmètre du premier substrat (16) est contrecollé à une portion du périmètre du second substrat (18) en utilisant de la chaleur et de la pression, and dans laquelle la fenêtre fournit un accès visuel à la cavité (12) de la carte (10).
